# EUROPEAN PATENT APPLICATION

(11) **EP 4 195 115 A1**
(43) Date of publication of application: **14.06.2023**
(21) Application number: 21213520.6
(22) Date of filing: 09.12.2021
(51) Int. Cl.: G06Q 10/00, G06Q 50/18

(54) **COMPARTMENTALIZING A PROCESS**

(71) Applicant: Captain Frank GmbH, 80538 München (DE)
(72) Inventor: von Mutius, Constantin, 82057 Icking (DE)
(74) Representative: Hoffmann Eitle

(57) **Abstract**

A method for compartmentalizing a process related to a legal claim into a product element and a plurality of process elements, wherein the product element determines the plurality of process elements, determines the order arrangement of the plurality of process elements with respect to each other and provides at least part of the input for the configuration of at least part of the plurality of process elements, wherein the product element and the plurality of process elements are created and configured independently from each other and independently from the legal claim, and wherein the structure of each of the plurality of process elements is independent from the legal claim.

## Description

### Technical Field

The present invention relates to compartmentalizing a process. Corresponding implementations relate to a method and an apparatus for compartmentalizing a process. The present invention can for example find an application in the context of legal processes such as legal claims, etc.

### Technical Background

In view of the tremendous progress made in information technology, the fast-growing field of legal tech, also known as legal technology, has emerged in recent years and has already shown a plethora of applications that have disruptive potential for a wide range of legal service.

While legal tech in general can be considered as the application of information technology on legal services, there are different levels of legal tech.

On a rather basic level, legal tech merely relates to applications and/or software that supports lawyers in their work processes in order to simplify them or make them more efficient. Applications on this first level of legal tech therefore only support the lawyer with little disruptive effect regarding changing legal advice or legal services. Examples are software for digital document management, billing or law firm management as well as online databases. On the other hand, in a slightly more sophisticated scenario, there are online legal advice portals that enforce claims by means of a non-lawyer service provider. This type of legal tech is sometimes named "Legal Tech 1.0".

In a more advanced level legal tech also includes automated legal services through new technologies. In such a case, software can independently take over legal tasks and, through automation, can make certain legal activities conventionally performed by a human operator obsolete, especially in the area of factual work. For example, contracts, statements of claim, data protection regulations can, at least partially, be automatically generated by software. These applications of legal tech are also referred to as "Legal Tech 2.0".

In an even more advanced level of legal tech, technological solutions are provided that enable the software to take over entire legal work processes and tasks and not just delimited sub-steps. These solutions oftentimes make use of highly advanced concepts of information technology such as artificial intelligence, machine learning, neural networks, blockchain technology and/or smart contracts. This most advanced type of applications in the realm of legal tech is sometimes referred to as "Legal Tech 3.0".

An issue present in all types of legal tech applications, or even in all types of information technology applications, is the question of flexibility in the configuration options and the workflow processes. In particular, it is of importance to note that in view of the fast chances in the legal service world, an application has to be able to react to these changes such that a change in the legal frame work can be implemented in the application without the need to rebuild or restructure the entire application. Moreover, such a flexibility clearly also has further advantages when transferring an application from one type of legal framework to another type of legal framework.

A particular relevant aspect of legal tech are processes related to enforcing compensation and consumer rights cases between individuals and companies. In this scenario, flexibility can particularly advantageous for quickly adapting the processes, the workflow and the entity itself to changing conditions as well as to automate the process flows.

Therefore, there is a need for a flexible application that is able to provide a framework in which a process, potentially a legal process, is compartmentalized in such a way that the resulting elements can be configured on their own, i.e., independently from the remaining elements, such that a flexible overall structure can be achieved.

### Summary

The above problems are solved by the subject-matter of the independent claims. Further preferred embodiments are given by the subject-matter of the dependent claims.

According to an embodiment of the present invention, there is provided a method for compartmentalizing a process related to a legal claim into a product element and a plurality of process elements, wherein the product element determines the plurality of process elements, determines the arrangement of the plurality of process elements with respect to each other and provides at least part of the input for the configuration of at least part of the plurality of process elements, wherein the product element and the plurality of process elements are created and configured independently from each other and independently from the legal claim, and wherein the structure of each of the plurality of process elements is independent from the legal claim.

According to a further embodiment of the present invention, there is provided an apparatus for compartmentalizing a process related to a legal claim into a product element and a plurality of process elements, wherein the product element determines the plurality of process elements, determines the arrangement of the plurality of process elements with respect to each other and provides at least part of the input for the configuration of at least part of the plurality of process elements, wherein the product element and the plurality of process elements are created and configured independently from each other and independently from the legal claim, and wherein the structure of each of the plurality of process elements is independent from the legal claim.

An advantage of some of the embodiments of the present invention may be the flexibility of the resulting compartmentalization of the process, which allows flexible configuration of the process in accordance with changes in the legal framework underlying the process and well as adopting the process to a different framework addressing a different underlying legal scenario.

### Brief Description of the Drawings

Embodiments of the present invention, which are presented for better understanding the inventive concepts but which are not to be seen as limiting the invention, will now be described with reference to the figures in which:
- Fig. 1: shows schematically a concept used in an embodiment according to the present invention;
- Fig. 2: shows schematically a life cycle of a product element in terms of the corresponding process elements according to the present invention;
- Fig. 3: shows schematically the architecture of an implementation according to the present invention;
- Fig. 4: shows a Model-Controller-View model used in an embodiment of according to the present invention; and
- Fig. 5: shows schematically a structure of an implementation using a just-in-time compiler according to the present invention; and
- Fig. 6: shows schematically a configuration of a process element according to the present invention.

### Detailed Description

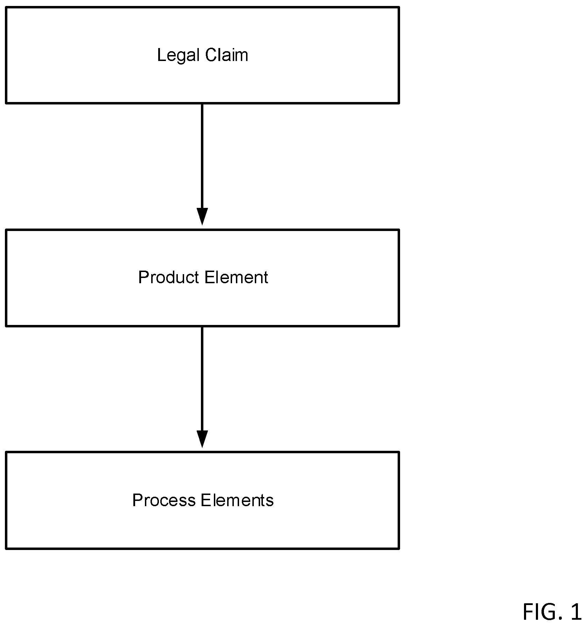

Fig. 1 shows schematically a concept used in an embodiment according to the present invention. As shown in Fig. 1, in a first step a legal claim is acquired. This legal claim forms the basis of the process to be compartmentalized. Based on this legal claim, a corresponding product element is determined. Further, the determined product element determines the corresponding plurality of process elements that are associated with this product element. Moreover, this step of determining the plurality of process elements may also include configuration aspects of the plurality of process elements, such as the arrangement of the plurality of process elements with respect to each other and/or an at least partial configuration of the plurality of process elements.

Further, the product element and the plurality of process elements may be created and configured independently from each other and independently from the legal claim; also, the structure of each process element is independent from the legal claim. That is, if for example the framework how to enforce a legal claim is changed, this change can be reflected by changing the product element and/or each of the plurality of process elements as required. In particular, a single element can be adjusted without changing any of the remaining elements, thereby achieving a flexible compartmentalization of the process underlying the legal claim.

This can be achieved by implementing the product element and the plurality of process elements as independent entities. Specifically, the product element is independent from each of the process elements and the legal claim and each of the process elements is independent from the remaining process elements and the legal claim.

In an example this independence from other elements is confined by the requirement of the elements to interact with each other, that is, the product element is implemented to represent the legal claim corresponding to it, the process elements are implemented to represent the corresponding steps and such that they can interact with each other and the product element.

In other words, in an embodiment according to the present invention, there is provided a method for compartmentalizing a process related to a legal claim into a product element and a plurality of process elements, wherein the product element determines the plurality of process elements, determines the arrangement of the plurality of process elements with respect to each other and provides at least part of the input for the configuration of at least part of the plurality of process elements, wherein the product element and the plurality of process elements are created and configured independently from each other and independently from the legal claim, and wherein the structure of each of the plurality of process elements is independent from the legal claim.

In addition to the method of compartmentalizing a process related to a legal claim, there is also provided a method for executing said process in said compartmentalized way. In other words, in an embodiment according to the present invention, there is also provided a method for executing a process related to a legal claim by executing a plurality of process elements obtained by executing a method of compartmentalized a process according to an embodiment of the invention on the process.

Moreover, the present invention also provides an apparatus that is configured to perform the above discussed methods for compartmentalizing a process resp. for executing the process according to the compartmentalization.

Accordingly, an embodiment according to the present invention provides an apparatus for compartmentalizing a process related to a legal claim into a product element and a plurality of process elements, wherein the product element determines the plurality of process elements, determines the arrangement of the plurality of process elements with respect to each other and provides at least part of the input for the configuration of at least part of the plurality of process elements, wherein the product element and the plurality of process elements are created and configured independently from each other and independently from the legal claim, and wherein the structure of each of the plurality of process elements is independent from the legal claim.

Moreover, according to an embodiment of the present invention there may also be provided an apparatus for executing a process related to a legal claim by executing a plurality of process elements obtained by executing a method for compartmentalizing a process according to an embodiment of the present invention on the process.

This apparatus may comprise a processor, a memory and an interface for receiving input and providing output. The interface may be a display, a keyboard, a mouse or the like as well as a combination thereof. The processor may be configured to process the information obtained and provide information to be output. The memory may be configured to store the information related to the various aspects of compartmentalizing the process and to execute the process according to the compartmentalization as well as to store intermediate information created during these steps. An example for such an apparatus may in some embodiments be a computer.

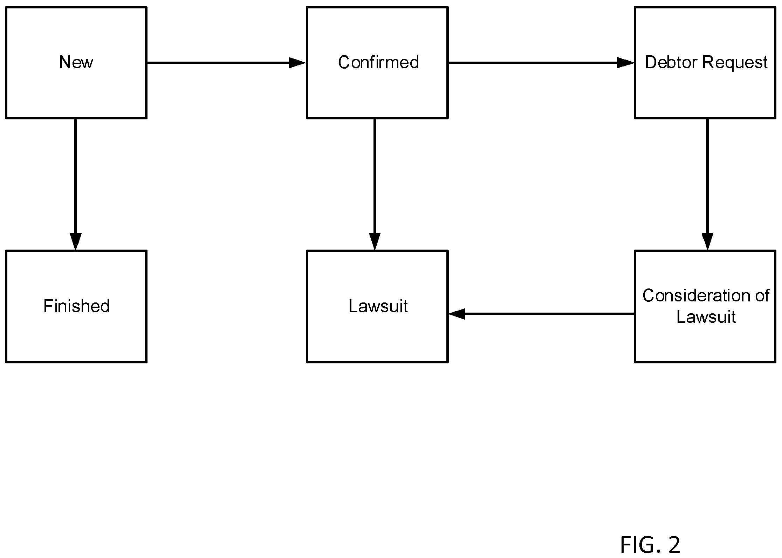

Fig. 2 shows schematically a life cycle of a product element in terms of the corresponding plurality of process elements according to the present invention. This life cycle is an example for a plurality of process elements representing a product element. As can be seen from Fig. 2, a product element may comprise the elements "New", "Finished", "Confirmed", "Debtor Request", "Consideration of Lawsuit" and "Lawsuit".

As can further be seen from Fig. 2, the life cycle of this life cycle may start from the process element "New" indicating that a new product element has been generated. In a first check, it may be ensured that the created product element is a valid product element, which may include a check whether the information is sufficiently complete to perform the normal life cycle of the product element. As indicated above, once the product element is determined, which is done based on the legal process, that is, based on for example the legal claim underlying the legal process, at least a part of the plurality of process elements and their configuration, both regarding each element as well as the plurality of elements as a whole, is determined. Thus, based on this determination of the product element, it may already at this stage be possible to evaluate whether the product element and its corresponding plurality of process elements can be executed. If this is the case, the life cycle goes on to the process element "Confirmed", while if this is not the case, the life cycle goes on to the process element "Finished" and, as indicated by the absence of any further arrows leaving this process element, the life cycle ends.

Further, once the life cycle of the process reaches the process element "Confirmed", there may be two options. In a first option of this bifurcation the process element "Debtor Request" is executed, that is, based on the legal claim underlying the legal process compartmentalized and executed, a debtor request is performed. This can be realized in various ways and can be automated to various extends. A simple example may be that the debtor is contacted, informed that the legal claim exists and that it is requested that said legal claim is fulfilled by the debtor.

Following this debtor request, various possibilities exist regarding the next step. One possibility is that the debtor respects the legal claim and fulfills it. Termination of life cycle may follow, possibly after some further administrative aspects to be considered, as in such a scenario the legal claim ceases to exist. A further possibility is that the debtor does not respect the legal claim, either in parts of in full. Accordingly, at least a part of the claim will not be fulfilled and at least this unfulfilled part of the claim remains. Thus, in this case further execution of the life cycle of the product element is possible. As shown in Fig. 2 by the process element "Consideration of a Lawsuit", the next process element of the life cycle may be the consideration of a lawsuit. In this process element, various aspect may be considered, among them for example the estimated chances of success of a lawsuit, the estimated costs of the lawsuit as well as the estimated result regarding the legal claim of the lawsuit. Based on this consideration, a decision may be made either for or against a lawsuit. If the decision is against the lawsuit, the life cycle of the product element, and thus the legal process, stops, at this point, wherein this may again be subject to possible further administrative aspects. If instead the decision is in favor of a lawsuit, the lawsuit will be filed and termination of the life cycle, again subject to possible further administrative aspects, may follow after the law suit has been terminated.

Moreover, as indicated by the arrow connecting the process elements "Confirmed" and "Lawsuit", it may also be possible that the debtor request and the potential consideration of a lawsuit are skipped, and a lawsuit is filed directly. This decision may be dependent on the specific details of the situation underlying the legal process and experience values with this product element, but may also be dependent on other factors. For example, if it is known that a certain debtor has a certain default reaction to debtor requests, in particular when the value of this request is above or below a certain value, this may have an influence on the decision to skip the debtor request.

From the example shown in Fig. 2, it is clear that this plurality of process elements is exemplary in nature only and various alternatives may be possible. For example, in many cases following a lawsuit in a first instance there is also the possibility to file an appeal in a second instance following the first instance proceedings. Moreover, for some types of legal claims and thus product elements mediation schemes may be possible which may also be incorporated. Further, in an embodiment of the present invention, the legal process runs through a certain lifecycle with defined statuses, which have a different workflow depending on the course of the process due to the combination of product, the user and the involved parties.

Due to the flexible structure, processes and triggered actions, virtually any process, not necessarily restricted to legal processes, can be compartmentalized using this method. Through this dynamic abstraction in the overall process a time-based digitisation becomes possible, which leads to an adapted process automation.

The addition of web services for interaction with users, communication with participating institutions and document upload and exchange may enable convenient interaction with users and the necessary process automation with all other parties involved.

In an example of the present invention, the legal claim may be related to a refund due to a flight delay. In this case, in a first step the type legal claim is input and based thereupon, the product element is determined to relate to a refund due to a flight delay. In a further step, information is provided regarding the details of the flight delay, e.g., customer details, flight details, delay details, airline details and the like. Based on this information, a preliminary check may be performed that determines whether this process is further performed. This preliminary check may also include a preliminary assessment of the success changes of the overall process, which may be assisted by or based on advanced information technologies such as machine learning, artificial intelligence and the like.

Following this, a debtor request may be started. For this step, it may be required that additional information is required by the user and accordingly is provided by the same. In line with the above, the debtor request may have at least two outcomes: Either the debtor request is successful and the claim is fulfilled which leads to a termination of the life cycle of the product element or the debtor request is not successful or at least in part not successful in which case the life cycle of the product process is continued. As mentioned above, every termination may include or be precluded by administrative aspects.

Assuming that the debtor request is not entirely successful, a consideration may be made whether a lawsuit is to be filed. This consideration, including also the question at which court the lawsuit may be filed, may also be assisted by or based on advanced information technology such as machine learning, artificial intelligence, neural networks and the like.

Moreover, the above example is in no way limiting. Instead, the product element may be one of a plurality of different elements and may be related to a flight ticket refund, for example due to delays, fitness gym costs, a compensation after a notice of termination, a credit contract, a refund of costs for a private health insurance a refund from an online casino, or a refund due to diesel manipulations. In other words, according to an embodiment of the present invention, in the method for compartmentalizing a process, the product element may represent one of a flight ticket refund, fitness gym costs, a compensation after notice of termination, a credit contract, a refund of costs for a private health insurance, a refund from an online casino or a refund due to diesel manipulations.

A flight ticket refund may relate to a legal claim based on a delay or a cancellation of a flight. The product element may then be named "Flight ticket refund" while the process elements may comprise "New", "Finished" and "Confirmed" that may be seen as starting process elements and may also comprise "Debtor Request", "Consideration of Lawsuit", and "Lawsuit" that may be seen as substantive process elements.

Fitness gym costs may relate to a legal claim based on a closed fitness gym, e.g. due to a pandemic, and costs for the membership to the fitness gym are requested. The product element may then be named "Fitness gym costs" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements.

A compensation after a notice of termination may relate to a legal claim based on a compensation after a notice of termination received by an employer. Accordingly, the product element may be named "Compensation after a notice of termination" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements. Alternatively, since the compensation may depend on various factors which may be more intricate and harder to determine than, for example, in the case of a flight ticket refund, a further process element "Negotiations" may be included in which the compensation is negotiated.

A credit contract may relate to a legal claim based on remaining or outstanding payment from a credit contract. Accordingly, the product element may be named "Credit contract" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements.

A refund of costs for a private health insurance may relate to a legal claim based on fees paid to a private health insurance that have no legal basis, for example due to recent changes in related contract law. Accordingly, the product element may be named "Refund of costs for a private health insurance" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements.

A refund from an online casino may relate to a legal claim based on losses suffered in an online casino which does not have the legal basis to operate as a casino. Accordingly, the product element may be named "Refund from an online casino" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements.

A refund due to diesel manipulations may relate to a legal claim based on diesel manipulations in combustion engine cars. Accordingly, the product element may be named "Diesel manipulation" while the process elements may, similar to the above, comprise "New", "Finished" and "Confirmed" that may be seen as starting process elements and may also comprise "Debtor Request", "Consideration of Lawsuit", and "Lawsuit" that may be seen as substantive process elements. Here, it is noted that that in case a "Musterfeststellungsklage", that is, a model declaratory action, has been filed and succeeded, the process elements may be varied because the verdict from said action may influence whether a separate lawsuit is necessary or whether this can be avoided and the result of the model declaratory action can be used. In such a case, a process element such as "Debtor Request based on Model Declaratory Action" may be used instead, which may be a debtor request that incorporates the result of the model declaratory action.

Here, it is noted that while the process elements may be similar when used for different product elements, these elements are, as discussed elsewhere in this document, configured at in least in parts by the choice of the product element and thus may take a different form for each product element.

Further, in line with the above, according to an embodiment of the present invention, in the method for compartmentalizing a process, the plurality of process elements may comprise one or more selected from elements representing a confirmation, a debtor request, a coverage request, an order for payment a consideration of a lawsuit, a lawsuit, or a revocation.

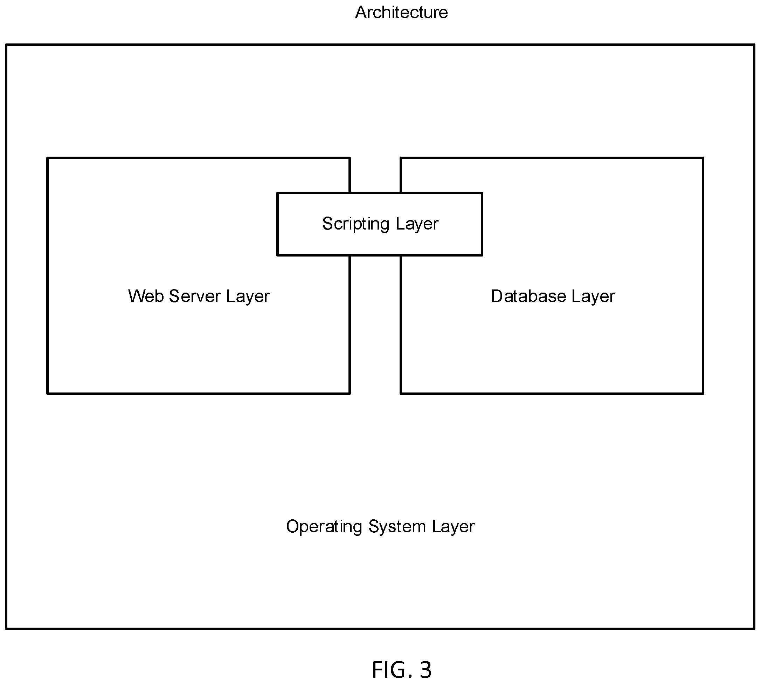

Fig. 3 shows schematically the architecture of an implementation according to the present invention. As shown in Fig. 3, the architecture may be based on an operating system layer comprising a web server layer and a database layer, wherein these two layers may communicate with each other by means of a scripting layer.

The operating system layer may make use of Linux. The web server layer may make use of APACHE. The database layer may make use of MySQL. The scripting layer may make use of PHP, PERL, Python or a combination thereof. A combination of these framework is known as "LAMP" stack originating from the initial letters of Linux, APACHE, MySQL and PHP.

Furthermore, the implementation of the logic underlying may make use of the Laravel framework. Laravel is a web application framework with an expressive syntax, which allows to provide features such as thorough dependency injection, an expressive database abstraction layer, queues and scheduled jobs, unit and integration testing, and the like.

In other words, in an embodiment according to the present invention, the process is implemented using a LAMP stack architecture.

Moreover, in an embodiment according to the present invention, the process is implemented using a Laravel web application framework.

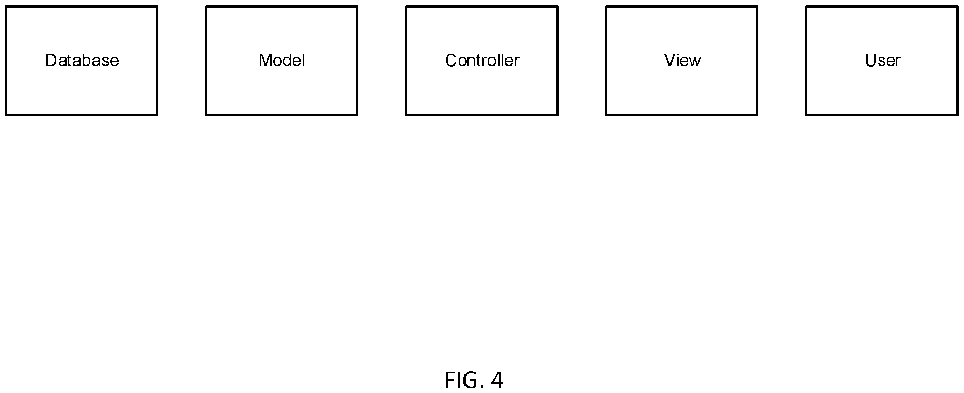

Further, Fig. 4 shows a Model-Controller-View (MVC) model used in an embodiment of according to the present invention. In detail, Fig. 4 shows on the left the database, on the right the user and in the middle the three components of the MVC model. The Model-View-Controller (MVC) is an architectural pattern that separates an application into three main logical components: the model, the view, and the controller. Each of these components are built to handle specific development aspects of an application. MVC is one of the most frequently used industry-standard web development frameworks to create scalable and extensible projects. In the following the three components of the MVC model are explained.

The Model component corresponds to all the data-related logic that the user works with. This can represent either the data that is being transferred between the View and Controller components or any other business logic-related data. For example, a customer object will retrieve the customer information from the database, manipulate it and update it data back to the database or use it to render data.

The View component is used for all the UI logic of the application. For example, the customer view will include all the UI components such as text boxes, dropdowns, etc. that the final user interacts with.

Controllers act as an interface between Model and View components to process all the business logic and incoming requests, manipulate data using the Model component and interact with the Views to render the final output. For example, the customer controller will handle all the interactions and inputs from the customer View and update the database using the customer Model. The same controller will be used to view the customer data.

In other words, in an embodiment according to the present invention, the process is implemented using a Model-View-Controller pattern.

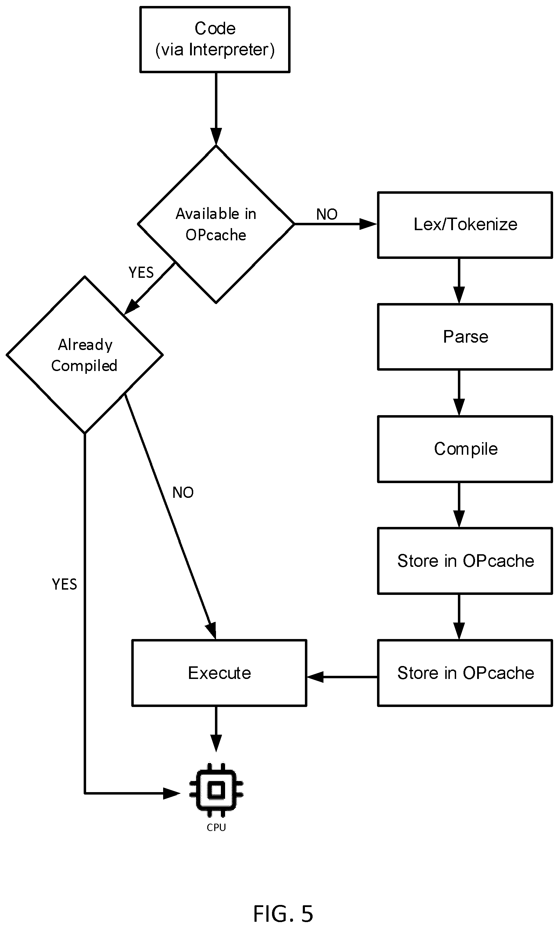

Fig. 5 shows schematically a structure of an implementation using a just-in-time (JIT) compiler according to the present invention. A JIT compiler compiles code, in particular opcode, that is, operation code, into machine code right before it is run for output, different from an ahead-of-time compiler which compiles the code into machine code long before the code is run for output. As can be seen from Fig. 5, the input for the processing of the JIT compiler processing is the code to be compiled. In a first step, it is decided whether this code is available in the Cache. If this is the case (YES), then it will be decided whether the code has already been compiled. If also this is the case, the existing code can be executed by the processor, i.e., by the CPU. If instead the code is not yet compiled (NO), the JIT compiler is executed, i.e., the code is compiled and is then executed by the processor. If instead the code is not available in Cache (NO in the first step), execution stages providing the cache will be performed. In detail, this includes a lexical analysis in which an interpreter, translates the code into machine-readable tokens, followed by a parser parsing the tokens to generate the Abstract Syntax Tree (AST) - a tree-like representation showing how the code works, a compilation in which interpreter converts the AST nodes into opcode which is a machine-readable instruction that indicates operation to perform, and ends with an execution in which the opcode will be compiled into machine code for execution. Accordingly, when the server receives a new request for the same script, the interpreter can immediately run the opcode from the Cache and thus the restart of the execution process from the beginning is not required.

In this context, the used framework Laravel, the used interpreted language PHP with the JIT compiler may complete the flexible concept of the methods according to the present invention discussed elsewhere in this document to make adjustments to the workflows during runtime without further deployments or migrations.

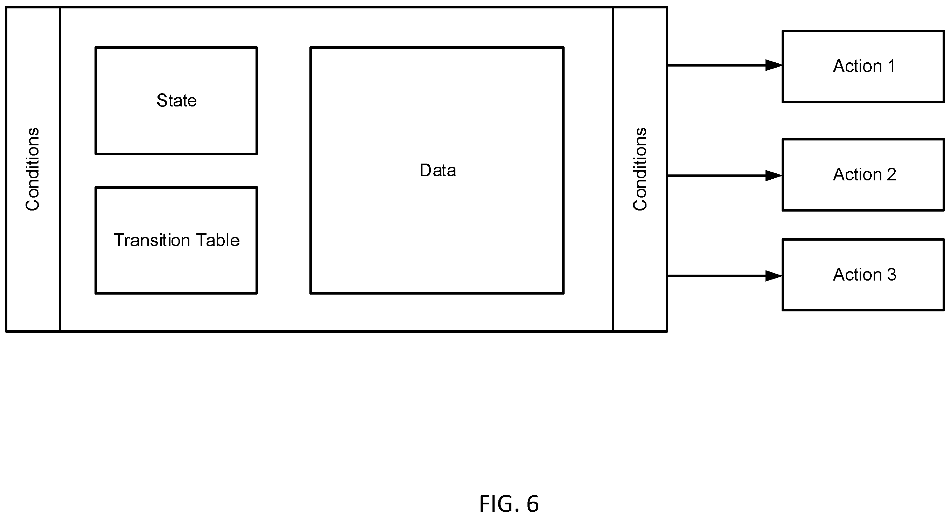

Fig. 6 shows schematically a configuration of a process element according to the present invention. A process element comprises at least one input condition, a state, a transition table, data, at least one output condition and at least one action.

Here, a "state" represents the status in which the process element is in at a certain point in time. For example, if the process element relates to a debtor request, the state may be one of "in preparation", "sent to debtor", "accepted by debtor", "rejected (at least in parts) by debtor", "finished" or the like. A "transition table" may represent the possible transition from this process element to another process element or towards a termination. "Data" here comprises the data relevant for the process element, for example, the name of the debtor, the address of the debtor, the type of claim, the value of the claim and the like. The at least one input condition may relate to a condition under which this process element is started while correspondingly the at least one output condition may relate to a condition for finishing the process element. The at least one action may relate to the transition from one process element to another process element and/or may relate to actions performed outside of the process element as such, for example, to sending the debtor request or similar processes.

In other words, in an embodiment according to the present invention, each of the plurality of process elements is made of at least a state, a transition table, data, at least one input condition, at least one output condition, and at least one action.

Based on this structure, or a similar structure, the process can be presented by a deterministic algorithm. A deterministic algorithm is an algorithm that, given a particular input, will always produce the same output, with the underlying machine always passing through the same sequence of states. Formally, a deterministic algorithm computes a mathematical function; a function has a unique value for any input in its domain, and the algorithm is a process that produces this particular value as output.

In the specific examples of deterministic algorithms used in embodiments according to the present invention, actions trigger functions with a given input and changes the state of the claim with a deterministic output. Depending on the respective status, the given conditions of the other statuses and the respective input, the status of the claim is transferred to one of the next statuses or also reset to an earlier status. Depending on the conditions, processes are triggered in parallel as well as in succession, since the next status transition must fulfil certain conditions.

In other words, in an embodiment according to the present invention, the process in implemented using a just-in-time compiler.

Although detailed embodiments have been described, these only serve to provide a better understanding of the invention defined by the independent claims and are not to be seen as limiting.

## Claims

1. A method for compartmentalizing a process related to a legal claim into a product element and a plurality of process elements,
wherein the product element determines the plurality of process elements, determines the arrangement of the plurality of process elements with respect to each other and provides at least part of the input for the configuration of at least part of the plurality of process elements,
wherein the product element and the plurality of process elements are created and configured independently from each other and independently from the legal claim, and wherein the structure of each of the plurality of process elements is independent from the legal claim.

2. The method according to claim 1, wherein the product element represents one of a flight ticket refund, fitness gym costs, a compensation after notice of termination, *a credit contract, a refund of costs for a private health insurance, a refund from an online casino, and a refund due to diesel manipulations.*

3. The method according to claim 1 or 2, wherein the plurality of process elements comprises one or more selected from elements representing a confirmation, a debtor request, a coverage request, an order for payment a consideration of a lawsuit, a lawsuit, or a revocation.

4. The method according to any of claims 1 to 3, wherein each of the plurality of process elements is made of at least a state, a transition table, data, at least one input condition, at least one output condition, and at least one action.

5. The method according to any of claims 1 to 4, wherein the process is implemented using a LAMP stack architecture.

6. The method according to any of claims 1 to 5, wherein the process is implemented using a Laravel web application framework.

7. The method according to any of claims 1 to 6, wherein the process is implemented using a Model-View-Controller pattern.

8. The method according to any of claims 1 to 7, wherein the process in implemented using a just-in-time compiler.

9. A method for executing a process related to a legal claim by executing a plurality of process elements obtained by executing the method according to any of claims 1 to 8 on the process.

10. An apparatus for compartmentalizing a process related to a legal claim into a product element and a plurality of process elements,
wherein the product element determines the plurality of process elements, determines the arrangement of the plurality of process elements with respect to each other and provides at least part of the input for the configuration of at least part of the plurality of process elements,
wherein the product element and the plurality of process elements are created and configured independently from each other and independently from the legal claim, and wherein the structure of each of the plurality of process elements is independent from the legal claim.

11. An apparatus for executing a process related to a legal claim by executing a plurality of process elements obtained by executing the method according to any of claims 1 to 8 on the process.
